# EUROPEAN PATENT APPLICATION

(11) **EP 4 653 096 A1**
(43) Date of publication of application: **26.11.2025**
(21) Application number: 24872818.0
(22) Date of filing: 20.09.2024
(51) Int. Cl.: B05C 5/02, B05C 11/10, H01M 4/04

(54) **SLOT DIE COATER**

(30) Priority: 25.09.2023 KR 20230127703
(71) Applicant: LG Energy Solution, Ltd., Seoul 07335 (KR)
(72) Inventor: PARK, Joon Sun, Daejeon 34122 (KR); CHOI, Min Hyuck, Daejeon 34122 (KR); KIM, Guk Tae, Daejeon 34122 (KR); KIM, Min Cheol, Daejeon 34122 (KR)
(74) Representative: Plasseraud IP
(86) International application number: PCT/KR2024/014133
(87) International publication number: WO 2025/071110

(57) **Abstract**

The present technology provides a slot die coater including: a die block including a first block with a manifold containing a coating liquid, and a second block on the first block; and a coater shim between the first block and the second block, in which the coater shim includes: a master shim including a first guide plate and a second guide plate spaced apart from each other with the manifold therebetween, in which the manifold is not covered with the first guide plate and the second guide plate; a first auxiliary shim provided on one side of the first guide plate and including a first inner region overlapping a first edge portion of the manifold; and a second auxiliary shim provided on one side of the second guide plate and including a second inner region overlapping a second edge portion of the manifold.

## Description

### [Technical Field]

The present invention relates to a slot die coater, and more particularly, to a slot die coater with a coater shim.

This application claims the benefit of priority based on Korean Patent Application No. 10-2023-0127703, filed on September 25, 2023, and the entire content of the Korean patent application is incorporated herein by reference.

### [Background Art]

With the development of technologies for mobile devices and an increasing demand for mobile devices, the demand for secondary batteries as an energy source is sharply increasing, and a secondary battery basically includes an electrode assembly which is a power generation element. The electrode assembly has a structure in which a positive electrode, a separator, and a negative electrode are stacked at least one, and the positive/negative electrode is manufactured by coating a current collector, which is formed of aluminum foil and copper foil, with a positive/negative electrode active material slurry and drying the resultant current collector. To secure uniform charge/discharge characteristics of the secondary battery, the current collectors should be evenly coated with the positive electrode active material slurry and the negative electrode active material slurry, and a slot die coater is generally used.

### [Disclosure]

### [Technical Problem]

The present invention is directed to providing a slot die coater with a coater shim.

### [Technical Solution]

An aspect of the present invention provides a slot die coater including: a die block including a first block with a manifold containing a coating liquid, and a second block on the first block; and a coater shim between the first block and the second block. The coater shim includes: a master shim including a first guide plate and a second guide plate spaced apart from each other with the manifold therebetween, in which the manifold is not covered with the first guide plate and the second guide plate; a first auxiliary shim provided on one side of the first guide plate and including a first inner region overlapping a first edge portion of the manifold; and a second auxiliary shim provided on one side of the second guide plate and including a second inner region overlapping a second edge portion of the manifold.

In example embodiments, the master shim may further include a base plate including one end connected to the first guide plate and another end connected to the second guide plate, the first auxiliary shim may extend along a side surface of the first guide plate from the base plate toward a discharge port of the die block, and the second auxiliary shim may extend along a side surface of the second guide plate from the base plate toward the discharge port of the die block.

In example embodiments, each of a width of the first inner region of the first auxiliary shim in the first direction and a width of the second inner region of the second auxiliary shim in the first direction may be in a range of 4 mm to 300 mm.

In example embodiments, the first auxiliary shim may further include a first outer region between the manifold and the first guide plate, and the second auxiliary shim further comprises a second outer region between the manifold and the first guide plate, and each of a width of the first outer region of the first auxiliary shim in the first direction and a width of the second outer region of the second auxiliary shim in the first direction may be in a range of 5 mm to 50 mm.

In example embodiments, the first auxiliary shim may include a first hole into which a first fastening member configured to fasten the first auxiliary shim to the first block is inserted, the second auxiliary shim may include a second hole into which a second fastening member configured to fasten the second auxiliary shim to the first block is inserted, and each of the first hole and the second hole may be a slot hole whose length is shorter in the first direction than in a second direction perpendicular to the first direction.

In example embodiments, an end of the first auxiliary shim and an end of the second auxiliary shim may be spaced apart from an end of the first block in the second direction.

In example embodiments, the slot die coater may further include a first fixing pin configured to be inserted into a corresponding hole in the first block through a first pin hole of the first auxiliary shim, a first bolt configured to be fastened to a corresponding hole in the first block through a first bolt hole of the first auxiliary shim, a second fixing pin configured to be inserted into a corresponding hole in the first block through a second pin hole of the second auxiliary shim, and a second bolt configured to be fastened to a corresponding hole in the first block through a second bolt hole of the second auxiliary shim, and each of the first pin hole, the second pin hole, the first bolt hole, and the second bolt hole is a slot hole whose length is less in the first direction than in a second direction.

In example embodiments, when viewed in a plan view, each of the first auxiliary shim and the second auxiliary shim may have a rectangular shape with a uniform width in the first direction.

In example embodiments, at least one of the first auxiliary shim and the second auxiliary shim may include a region, a width of which decreases toward a discharge port of the die block.

In example embodiments, at least one of the first auxiliary shim and the second auxiliary shim ay include a region, a width of which increases toward a discharge port of the die block.

In example embodiments, each of the first auxiliary shim and the second auxiliary shim may not vertically overlap the master shim, and a distance between the first auxiliary shim and the second auxiliary shim in the first direction may be less than a width of the manifold in the first direction.

An aspect of the present invention provides a slot die coater including: a die block including a first block with a manifold containing a coating liquid, and a second block on the first block; and a coater shim between the first block and the second block. The coater shim includes: a master shim including a base plate extending in a first direction, a first guide plate extending from the base plate toward a discharge port of the die block in a second direction, and a second guide plate extending from the base plate toward the discharge port of the die block in the second direction, in which the first guide plate and the second guide plate are spaced apart from each other in the first direction; a first auxiliary shim fastened to the first block via a first fastening member, and including a first hole into which the first fastening member is inserted; and a second auxiliary shim fastened to the first block via a second fastening member, and including a second hole into which the second fastening member is inserted. The first auxiliary shim and the second auxiliary shim are between the first guide plate and the second guide plate, a length of the first hole of the first auxiliary shim in the second direction is greater than a length of the first hole of the first auxiliary shim in the first direction, and a length of the second hole of the second auxiliary shim in the second direction is greater than a length of the second hole of the second auxiliary shim in the first direction.

In example embodiments, an end of the first auxiliary shim and an end of the second auxiliary shim may be spaced apart from an end of the first block in the second direction.

In example embodiments, each of the first auxiliary shim and the second auxiliary shim may extend in the second direction from the base plate toward the discharge port of the die block.

In example embodiments, the first auxiliary shim may be connected to a side surface of the first guide plate, and the second auxiliary shim may be connected to a side surface of the second guide plate.

### [Advantageous Effects]

According to example embodiments of the present invention, a coater shim includes a master shim and first and second auxiliary shims, and opposite edges of a manifold on a die block are completely covered with the first and second auxiliary shims to prevent a coating liquid supplied from the manifold from leaking to regions other than a slot of a slot die coater.

According to example embodiments of the present invention, holes of the first and second auxiliary shims for fastening the first and second auxiliary shims to the die block are slot holes extending in a direction in which the coating liquid is discharged to adjust an offset distance in response to abrasion or deformation of the die block. It is not necessary to manufacture a coater shim whenever the die block is abraded or deformed, thereby reducing costs of a process using the slot die coater.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 is a cross-sectional view of a slot die coater according to example embodiments of the present invention.
FIG. 2 is an exploded perspective view of a slot die coater according to example embodiments of the present invention.
FIG. 3 is a plan view of a coater shim of a slot die coater according to example embodiments of the present invention.
FIG. 4 is a plan view of a part of a slot die coater according to example embodiments of the present invention.
FIG. 5 is a cross-sectional view taken along line AA-AA' of FIG. 4.
FIG. 6 is a plan view of a part of a slot die coater according to example embodiments of the present invention.
FIG. 7 is a cross-sectional view taken along line BB-BB' of FIG. 6.
FIG. 8 is a plan view of a part of a slot die coater according to example embodiments of the present invention.
FIG. 9 is a plan view of a part of a slot die coater according to example embodiments of the present invention.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

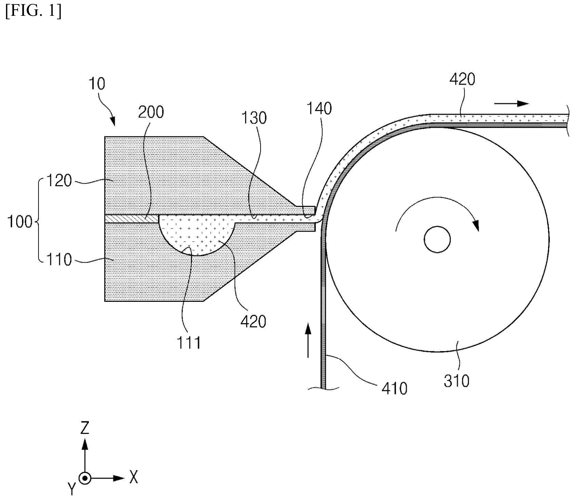

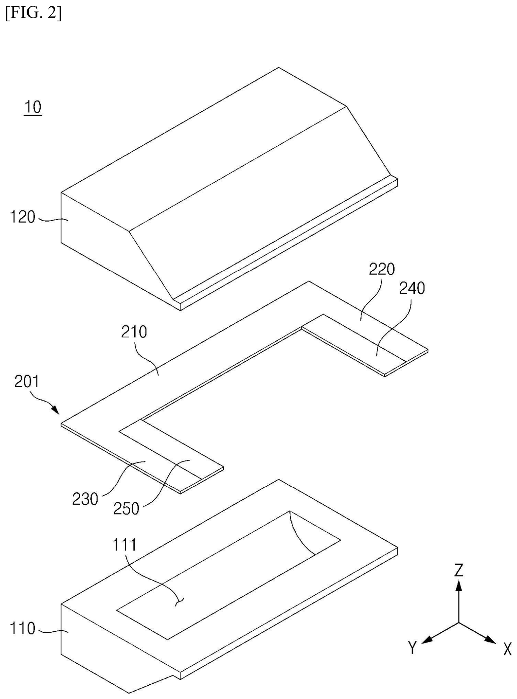

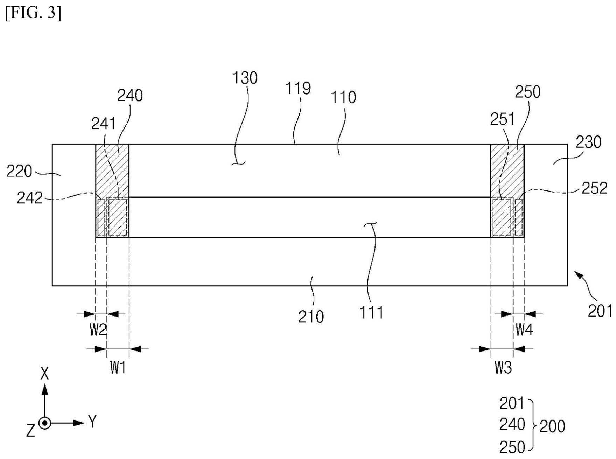

FIG. 1 is a cross-sectional view of a slot die coater 10 according to example embodiments of the present invention. FIG. 2 is an exploded perspective view of the slot die coater 10 according to example embodiments of the present invention. FIG. 3 is a plan view of a coater shim 200 of the slot die coater 10 according to example embodiments of the present invention.

Referring to FIGS. 1 to 3, the slot die coater 10 may be configured to apply a coating liquid 420 on a substrate 410 to be moved by a coating roll 310. In example embodiments, the substrate 410 may be a current collector, and the coating liquid 420 may include an electrode slurry. The electrode slurry may include a positive electrode active material slurry or a negative electrode active material slurry. While the substrate 410 is transferred along a predetermined path by the coating roll 310, the coating liquid 420 discharged from the slot die coater 10 may form a coating layer on one surface of the substrate 410.

The slot die coater 10 may include a die block 100 including a first block 110 and a second block 120, and a coater shim 200 between the first block 110 and the second block 120. The coater shim 200 may be interposed between the first block 110 and the second block 120 and form a slot 130 corresponding to a passage through which the coating liquid 420 flows. The slot 130 may communicate with a discharge port 140 of the die block 100 through which the coating liquid 420 is discharged.

The first block 110 may include a manifold 111 for accommodation of the coating liquid 420. The manifold 111 may be a space recessed from an upper surface of the first block 110 and communicate with the slot 130 between the first block 110 and the second block 120. When a direction parallel to a discharge direction in which the coating liquid 420 is discharged is referred to as a second direction (e.g., an X-axis direction) and a direction perpendicular to the discharge direction of the coating liquid 420 is referred to as a first direction (e.g., a Y-axis direction), a length of the manifold 111 in the first direction (e.g., the Y-axis direction) may be greater than a length of the manifold 111 in the second direction (e.g., the X-axis direction). A liquid supply outside the die block 100 may supply the coating liquid 420 to the manifold 111 of the first block 110. When the manifold 111 is full of the coating liquid 420, the coating liquid 420 flows along the slot 130 to the discharge port 140 of the die block 100 and is discharged through the discharge port 140 of the die block 100 in the discharge direction (e.g., the X-axis direction).

The coater shim 200 may include a master shim 201, a first auxiliary shim 240, and a second auxiliary shim 250.

The master shim 201 may be provided between the first block 110 and the second block 120, and fastened and fixed to the die block 100. A thickness of the master shim 201 may be generally uniform. The master shim 201 may be fastened and fixed to the upper surface of the first block 110. The master shim 201 may be fastened and fixed to the first block 110 not to cover the manifold 111 or not to overlap the manifold 111 in a vertical direction (e.g., a Z-axis direction).

The master shim 201 may include a base plate 210, a first guide plate 220, and a second guide plate 230. The master shim 201 may be a single piece, and the base plate 210, the first guide plate 220, and the second guide plate 230 may be formed in one body. The base plate 210 may extend on the first block 110 in the first direction (e.g., the Y-axis direction). The first guide plate 220 may be connected to one end of the base plate 210 in the first direction (e.g., the Y-axis direction), and extend in the second direction (e.g., the X-axis direction) from the end of the base plate 210 in the first direction (e.g., the Y-axis direction) toward an end of the die block 100 provided with the discharge port 140. The second guide plate 230 may be connected to another end of the base plate 210 in the first direction (e.g., the Y-axis direction), and extend in the second direction (e.g., the X-axis direction) from the other end of the base plate 210 in the first direction (e.g., the Y-axis direction) toward the end of the die block 100 provided with the discharge port 140. The first guide plate 220 and the second guide plate 230 may be spaced apart from each other in the first direction (e.g., the Y-axis direction) with the manifold 111 therebetween. Each of the first guide plate 220 and the second guide plate 230 may be provided not to cover the manifold 111. Each of the first guide plate 220 and the second guide plate 230 may have a rectangular shape with a uniform width in the first direction (e.g., the Y-axis direction).

The first auxiliary shim 240 and the second auxiliary shim 250 may be fastened and fixed to the die block 100. Each of the first auxiliary shim 240 and the second auxiliary shim 250 may have a substantially uniform thickness. The first auxiliary shim 240 and the second auxiliary shim 250 may be fastened and fixed to the upper surface of the first block 110. The first auxiliary shim 240 and the second auxiliary shim 250 may be located on the same plane as the master shim 201. The first auxiliary shim 240 and the second auxiliary shim 250 are provided in a lateral direction (e.g., the X-axis direction and/or the Y-axis direction) of the master shim 201 and do not overlap each other in the vertical direction (e.g., the Z-axis direction).

The first auxiliary shim 240 may be provided on one side of the first guide plate 220, and the second auxiliary shim 250 may be provided on one side of the second guide plate 230. One side surface of the first auxiliary shim 240 may be in contact with one side surface of the first guide plate 220, and the first auxiliary shim 240 may continuously extend along the one side surface of the first guide plate 220. The first auxiliary shim 240 may extend in the second direction (e.g., the X-axis direction) from the base plate 210 toward an end of the die block 100. One side surface of the second auxiliary shim 250 may be in contact with one side surface of the second guide plate 230, and the second auxiliary shim 250 may continuously extend along the one side surface of the second guide plate 230. The second auxiliary shim 250 may extend in the second direction (e.g., the X-axis direction) from the base plate 210 toward the end of the die block 100. Each of the first auxiliary shim 240 and the second auxiliary shim 250 may have a rectangular shape with a uniform width in the first direction (e.g., the Y-axis direction).

The first auxiliary shim 240 and the second auxiliary shim 250 may be spaced apart from each other in the first direction (e.g., the Y-axis direction). The slot 130 may be understood as a space between the first auxiliary shim 240 and the second auxiliary shim 250. A width of the slot 130 in the first direction (e.g., the Y-axis direction) may correspond to a distance between the first auxiliary shim 240 and the second auxiliary shim 250 in the first direction (e.g., the Y-axis direction). The width of the slot 130 in the first direction (e.g., the Y-axis direction) may be less than a width of the manifold 111 in the first direction (e.g., the Y-axis direction).

Each of the first auxiliary shim 240 and the second auxiliary shim 250 may cover a part of the manifold 111. The first auxiliary shim 240 may include a first inner region 241 covering or overlapping a first edge portion of the manifold 111, and a first outer region 242 between the manifold 111 and the first guide plate 220 in the first direction (e.g., the Y-axis direction). The second auxiliary shim 250 may include a second inner region 251 covering or overlapping a second edge portion of the manifold 111, and a second outer region 252 between the manifold 111 and the second guide plate 230 in the first direction (e.g., the Y-ais direction). The first inner region 241 of the first auxiliary shim 240 may be referred to as a first overlapping region, and the second inner region 251 of the second auxiliary shim 250 may be referred to as a second overlapping region. The first and second edge portions of the manifold 111 are opposite ends of the manifold 111 in the first direction (e.g., the Y-axis direction), and the coating liquid 420 is supplied to the slot 130 through a central portion of the manifold 111 between the first and second edge portions of the manifold 111.

In a slot die coater according to a comparative example, a boundary between an auxiliary shim and a master shim is on a manifold, and in this case, a coating liquid discharged from the manifold may leak into a gap between the auxiliary shim and the master shim. The leakage of the coating liquid may cause internal contamination of the slot die coater and reduce the uniformity of a coating process.

However, according to example embodiments of the present invention, opposite edge portions of the manifold 111 are completely covered with the first and second auxiliary shims 240 and 250, and a boundary between each of the first and second auxiliary shim 240 and 250 and the master shim 201 is located outside the manifold 111. Accordingly, it is possible to prevent the coating liquid 420 supplied from the manifold 111 from leaking to regions other than the slot 130.

In example embodiments, a width W1 of the first inner region 241 of the first auxiliary shim 240 in the first direction (e.g., the Y-axis direction) and a width W3 of the second inner region 251 of the second auxiliary shim 250 in the first direction (e.g., the Y-axis direction) may be in a range of 4 mm to 300 mm. When a width of an overlapping area between each of the first and second auxiliary shims 240 and 250 and the manifold 111 is extremely small, a thickness deviation of the coating liquid 420 applied on the substrate 410 is likely to increase. For example, each of the width W1 of the first inner region 241 of the first auxiliary shim 240 in the first direction (e.g., the Y-axis direction) and the width W3 of the second inner region 251 of the second auxiliary shim 250 in the first direction (e.g., the Y-axis direction) may be 6 mm or more, 8 mm or more, 10 mm or more, 12 mm or more, 14 mm or more, or 16 mm or less. For example, each of the width W1 of the first inner region 241 of the first auxiliary shim 240 in the first direction (e.g., the Y-axis direction) and the width W3 of the second inner region 251 of the second auxiliary shim 250 in the first direction (e.g., the Y-axis direction) may be 30% or less, 25% or less, or 20% or less of the width of the manifold 111 in the first direction (e.g., the Y-axis direction).

In example embodiments, a width W2 of the first outer region 242 of the first auxiliary shim 240 in the first direction (e.g., the Y-axis direction) and a width W4 of the second outer region 252 of the second auxiliary shim 250 in the first direction (e.g., the Y-axis direction) may be in a range of 5 mm to 50 mm. When the width W2 of the first outer region 242 of the first auxiliary shim 240 and the width W4 of the second outer region 252 of the second auxiliary shim 250 are set to 5 mm or more, the coating liquid 420 supplied from the manifold 111 can be effectively prevented from leaking to regions other than the slot 130.

### (Second Embodiment)

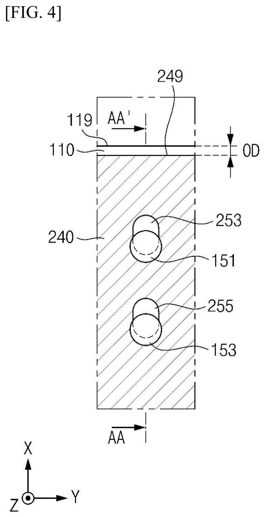

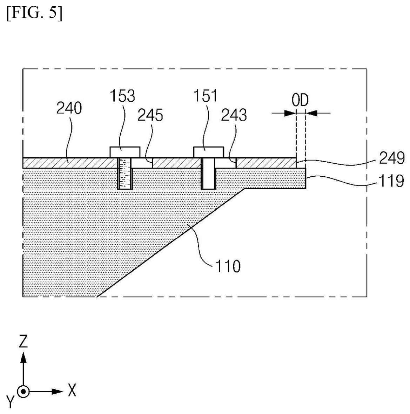

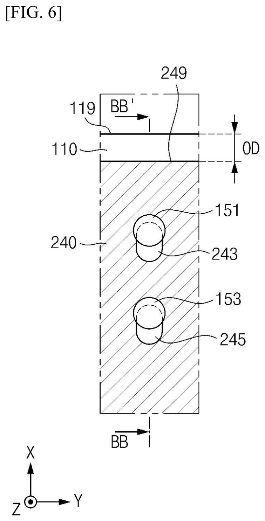

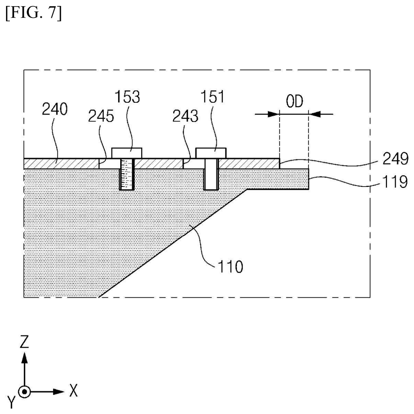

FIG. 4 is a plan view of a part of the slot die coater 10 according to example embodiments of the present invention. FIG. 5 is a cross-sectional view taken along line AA-AA' of FIG. 4. FIG. 6 is a plan view of a part of the slot die coater 10 according to example embodiments of the present invention. FIG. 7 is a cross-sectional view taken along line BB-BB' of FIG. 6.

Referring to FIGS. 4 to 7 together with FIGS. 1 to 3, the first auxiliary shim 240 may be fastened and fixed to the first block 110 by at least one first fastening member (e.g., a first fixing pin 151 and a first bolt 153).

In example embodiments, the first auxiliary shim 240 may be fastened and fixed to the first block 110 by the first fixing pin 151 and the first bolt 153. The first auxiliary shim 240 may include a first pin hole 243 into which the first fixing pin 151 is inserted and a first bolt hole 245 into which the first bolt 153 is inserted. The first pin hole 243 may vertically overlap a corresponding hole in the first block 110, and the first bolt hole 245 may vertically overlap a corresponding hole in the first block 110. The first fixing pin 151 may be inserted into and fixed to a corresponding hole in the first block 110 while being passed through the first pin hole 243 of the first auxiliary shim 240. The first bolt 153 may be inserted into and fastened to a corresponding hole in the first block 110 while being passed through the first bolt hole 245 of the first auxiliary shim 240. When the first auxiliary shim 240 is mounted on the first bolt 153, the first auxiliary shim 240 may be aligned and fixed to a target position using the first fixing pin 151 and thereafter be fastened to the first block 110 using a second bolt.

In example embodiments, each of the first pin hole 243 and the first bolt hole 245 in the first auxiliary shim 240 may be a slot hole with a minor axis parallel to the first direction (e.g., the Y-axis direction) and a major axis parallel to the second direction (e.g., the X-axis direction). That is, a length of the first pin hole 243 in the second direction (e.g., the X-axis direction) may be greater than a length of the first pin hole 243 in the first direction (e.g., the Y-axis direction), and a length of the first bolt hole 245 in the second direction (e.g., the X-axis direction) may be greater than a length of the first bolt hole 245 in the first direction (e.g., the Y-axis direction). When the first pin hole 243 and the first bolt hole 245 of the first auxiliary shim 240 are configured as slot holes with a major axis parallel to the second direction (e.g., the X-axis direction), an offset distance OD that is a distance between an end 249 of the first auxiliary shim 240 and an end 119 of the first block 110 may be adjusted by adjusting a relative position between the first fixing pin 151 and the first pin hole 243 and a relative position between the first bolt 153 and the first bolt hole 245. The offset distance OD is a parameter that affects a thickness profile of an edge region of the coating layer applied on the substrate 410. The offset distance OD may be changed when the die block 100 is abraded or deformed. According to the present invention, the offset distance OD may be controlled in response to the abrasion or deformation of the die block 100 by configuring the first pin hole 243 and the first bolt hole 245 of the first auxiliary shim 240 as slot holes. Therefore, it is not necessary to manufacture the coater shim 200 whenever the die block 100 is abraded or deformed, thereby reducing costs of a process using the slot die coater 10.

The second auxiliary shim 250 may have substantially the same configuration as the first auxiliary shim 240. Although the first auxiliary shim 240 has been described above with reference to FIGS. 4 to 7, the configuration of the second auxiliary shim 250 will be obvious to those of ordinary skill in the art from the above description of the first auxiliary shim 240. Briefly, the second auxiliary shim 250 may be fastened to the first block 110 by a second fastening member (i.e., a second fixing pin and a second bolt). The second fixing pin may be inserted into and fixed to a corresponding hole in the first block 110 while being passed through a second pin hole of the second auxiliary shim 250, and the second bolt may be inserted into and fastened to a corresponding hole in the first block 110 while being passed through a second bolt hole of the second auxiliary shim 250. Each of the second pin hole and the second bolt hole of the second auxiliary shim 250 may be a slot hole with a minor axis parallel to the first direction (e.g., the Y-axis direction) and a major axis parallel to the second direction (e.g., the X-axis direction). An offset distance between an end of the second auxiliary shim 250 and an end of the first block 110 may be adjusted by adjusting a relative position between the second fixing pin and the second pin hole and a relative position between the second bolt and the second bolt hole.

### (Third Embodiment)

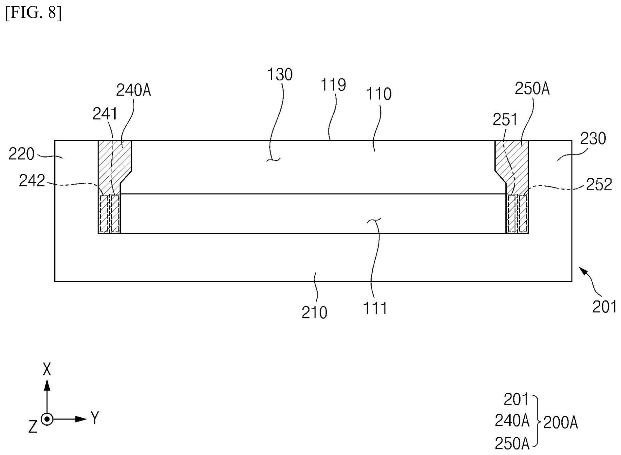

FIG. 8 is a plan view of a part of a slot die coater according to example embodiments of the present invention. Hereinafter, the slot die coater of FIG. 8 will be described focusing on differences from the slot die coater 10 described above with reference to FIGS. 1 to 3.

Referring to FIGS. 1 and 8, in a coater shim 200A, each of a first auxiliary shim 240A and a second auxiliary shim 250A may include a region, a width of which increases toward the discharge port 140 of the die block 100 in the first direction (e.g., the Y-axis direction). When the first auxiliary shim 240A includes a first portion, a second portion, and a third portion that are arranged along the discharge direction of the coating liquid 420, a width of the third portion of the first auxiliary shim 240A in the first direction (e.g., the Y-axis direction) may be greater than a width of the first portion of the first auxiliary shim 240A in the first direction (e.g., the Y-axis direction), and a width of the second portion of the first auxiliary shim 240A in the first direction (e.g., the Y-axis direction) may increase toward the discharge port 140 of the die block 100. Likewise, when the second auxiliary shim 250A includes a first portion, a second portion, and a third portion that are arranged along the discharge direction of the coating liquid 420, a width of the third portion of the second auxiliary shim 250A in the first direction (e.g., the Y-axis direction) may be greater than a width of the first portion of the second auxiliary shim 250A in the first direction (e.g., the Y-axis direction), and a width of the second portion of the second auxiliary shim 250A in the first direction (e.g., the Y-axis direction) may increase toward the discharge port 140 of the die block 100.

### (Fourth Embodiment)

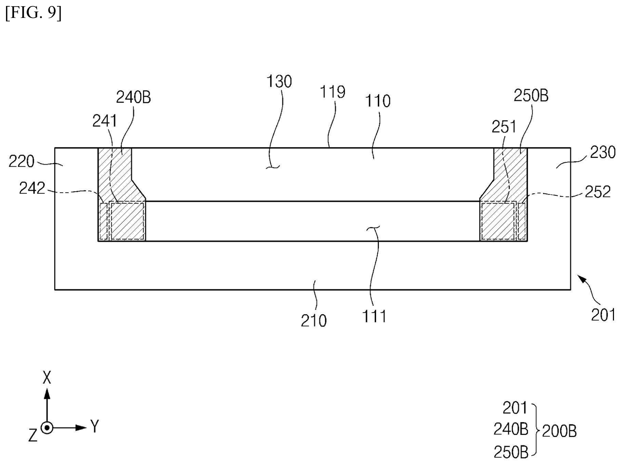

FIG. 9 is a plan view of a part of a slot die coater according to example embodiments of the present invention. Hereinafter, the slot die coater of FIG. 9 will be described focusing on differences from the slot die coater 10 described above with reference to FIGS. 1 to 3.

Referring to FIGS. 1 and 9, in a coater shim 200B, each of a first auxiliary shim 240B and a second auxiliary shim 250B may include a region, a width of which decreases toward the discharge port 140 of the die block 100 in the first direction (e.g., the Y-axis direction). When the first auxiliary shim 240B includes a first portion, a second portion, and a third portion that are arranged along the discharge direction of the coating liquid 420, a width of the third portion of the first auxiliary shim 240B in the first direction (e.g., the Y-axis direction) may be less than a width of the first portion of the first auxiliary shim 240A in the first direction (e.g., the Y-axis direction), and a width of the second portion of the first auxiliary shim 240A in the first direction (e.g., the Y-axis direction) may decrease toward the discharge port 140 of the die block 100. Likewise, when the second auxiliary shim 250B includes a first portion, a second portion, and a third portion that are arranged along the discharge direction of the coating liquid 420, a width of the third portion of the second auxiliary shim 250B in the first direction (e.g., the Y-axis direction) may be less than a width of the first portion of the second auxiliary shim 250B in the first direction (e.g., the Y-axis direction), and a width of the second portion of the second auxiliary shim 250A in the first direction (e.g., the Y-axis direction) may decrease toward the discharge port 140 of the die block 100.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A slot die coater comprising:
a die block comprising a first block and a second block on the first block, the first block including a manifold containing a coating liquid; and
a coater shim between the first block and the second block,
wherein the coater shim comprises:
a master shim including a first guide plate and a second guide plate spaced apart from each other with the manifold therebetween, wherein the manifold is not covered with the first guide plate and the second guide plate;
a first auxiliary shim provided on one side of the first guide plate and including a first inner region overlapping a first edge portion of the manifold; and
a second auxiliary shim provided on one side of the second guide plate and including a second inner region overlapping a second edge portion of the manifold.

2. The slot die coater of claim 1, wherein
the master shim further comprises a base plate including one end connected to the first guide plate and another end connected to the second guide plate,
the first auxiliary shim extends along a side surface of the first guide plate from the base plate toward a discharge port of the die block, and
the second auxiliary shim extends along a side surface of the second guide plate from the base plate toward the discharge port of the die block.

3. The slot die coater of claim 1, wherein
each of a width of the first inner region of the first auxiliary shim in the first direction and a width of the second inner region of the second auxiliary shim in the first direction is in a range of 4 mm to 300 mm.

4. The slot die coater of claim 1, wherein
the first auxiliary shim further comprises a first outer region between the manifold and the first guide plate, and
the second auxiliary shim further comprises a second outer region between the manifold and the first guide plate,
wherein each of a width of the first outer region of the first auxiliary shim in the first direction and a width of the second outer region of the second auxiliary shim in the first direction is in a range of 5 mm to 50 mm.

5. The slot die coater of claim 1, wherein
the first auxiliary shim includes a first hole into which a first fastening member configured to fasten the first auxiliary shim to the first block is inserted, and
the second auxiliary shim includes a second hole into which a second fastening member configured to fasten the second auxiliary shim to the first block is inserted,
wherein each of the first hole and the second hole is a slot hole, wherein a length of the slot hole in the first direction is less than a length of the slot hole in a second direction perpendicular to the first direction.

6. The slot die coater of claim 5, wherein
an end of the first auxiliary shim and an end of the second auxiliary shim are spaced apart from an end of the first block in the second direction.

7. The slot die coater of claim 1, further comprising:
a first fixing pin configured to be inserted into a corresponding hole in the first block through a first pin hole of the first auxiliary shim;
a first bolt configured to be fastened to a corresponding hole in the first block through a first bolt hole of the first auxiliary shim;
a second fixing pin configured to be inserted into a corresponding hole in the first block through a second pin hole of the second auxiliary shim; and
a second bolt configured to be fastened to a corresponding hole in the first block through a second bolt hole of the second auxiliary shim,
wherein each of the first pin hole, the second pin hole, the first bolt hole, and the second bolt hole is a slot hole, wherein a length of the slot hole in the first direction is less than a length of the slot hole in a second direction perpendicular to the first direction.

8. The slot die coater of claim 1, wherein,
when viewed in a plan view, each of the first auxiliary shim and the second auxiliary shim has a rectangular shape with a uniform width in the first direction.

9. The slot die coater of claim 1, wherein
at least one of the first auxiliary shim and the second auxiliary shim comprises a region, a width of which decreases toward a discharge port of the die block.

10. The slot die coater of claim 1, wherein
at least one of the first auxiliary shim and the second auxiliary shim comprises a region, a width of which increases toward a discharge port of the die block.

11. The slot die coater of claim 1, wherein
each of the first auxiliary shim and the second auxiliary shim does not vertically overlap the master shim, and
a distance between the first auxiliary shim and the second auxiliary shim in the first direction is less than a width of the manifold in the first direction.

12. A slot die coater comprising:
a die block comprising a first block and a second block on the first block, the first block including a manifold containing a coating liquid; and
a coater shim between the first block and the second block,
wherein the coater shim comprises:
a master shim comprising a base plate extending in a first direction, a first guide plate extending from the base plate toward a discharge port of the die block in a second direction, and a second guide plate extending from the base plate toward the discharge port of the die block in the second direction, wherein the first guide plate and the second guide plate are spaced apart from each other in the first direction;
a first auxiliary shim fastened to the first block via a first fastening member, and including a first hole into which the first fastening member is inserted; and
a second auxiliary shim fastened to the first block via a second fastening member, and including a second hole into which the second fastening member is inserted,
wherein the first auxiliary shim and the second auxiliary shim are between the first guide plate and the second guide plate,
a length of the first hole of the first auxiliary shim in the second direction is greater than a length of the first hole of the first auxiliary shim in the first direction, and
a length of the second hole of the second auxiliary shim in the second direction is greater than a length of the second hole of the second auxiliary shim in the first direction.

13. The slot die coater of claim 12, wherein
an end of the first auxiliary shim and an end of the second auxiliary shim are spaced apart from an end of the first block in the second direction.

14. The slot die coater of claim 12, wherein
each of the first auxiliary shim and the second auxiliary shim extends in the second direction from the base plate toward the discharge port of the die block.

15. The slot die coater of claim 14, wherein
the first auxiliary shim is connected to a side surface of the first guide plate, and
the second auxiliary shim is connected to a side surface of the second guide plate.
